# EUROPÄISCHE PATENTANMELDUNG

(11) **EP 2 896 864 A1**
(43) Veröffentlichungstag der Anmeldung: **22.07.2015**
(21) Anmeldenummer: 14151885.2
(22) Anmeldetag: 21.01.2014
(51) Int. Cl.: F16L 23/028

(54) **Verbindungssystem**

(71) Anmelder: Siemens Aktiengesellschaft, 80333 München (DE)
(72) Erfinder: Piedboeuf, Wolfgang, 50769 Köln (DE); Ruda, Thomas, 47447 Moers (DE)

(57) **Zusammenfassung**

Ein Verbindungssystem (1) zur lösbaren Verbindung eines ersten Rohrendes (2) mit einem zweiten Rohrende (4), wobei das erste Rohrende (2) einen dem zweiten Rohrende (4) zugewandten Dichtkegel (6) und an seiner Außenseite einen Schulterabschnitt (10) aufweist, soll Funktion und Sicherung der Verbindung zweier Rohr- oder Schlauchenden gewährleisten, besonders einfach zu montieren sein und gleichzeitig eine besonders hohe Lebensdauer aufweisen. Dazu umfasst es eine das erste Rohrende (2) bündig umschließende, an der dem Dichtkegel (6) abgewandten Seite des Schulterabschnitts (10) angeordnete erste Spannscheibe (12), eine das zweite Rohrende (4) umschließende mit diesem verbundene zweite Spannscheibe (16), und eine Mehrzahl von Schrauben (20), die die erste Spannscheibe (12) mit der zweiten Spannscheibe (14) lösbar verbinden.

## Beschreibung

Die Erfindung betrifft ein Verbindungssystem zur lösbaren Verbindung eines ersten Rohrendes mit einem zweiten Rohrende, wobei das erste Rohrende einen dem zweiten Rohrende zugewandten Dichtkegel und an seiner Außenseite einen Schulterabschnitt aufweist.

Verbindungssysteme der genannten Art sind beispielsweise aus der DE 101 44 039 A1 unter der Bezeichnung "Dichtkegelverschraubung" bekannt. Sie dienen der lösbaren Verbindung zweier hohlzylindrischer Rohrenden. Hierzu wird ein rotationssymmetrisches, konisch und hohl ausgebildetes Anschlusselement mit dem ersten Rohrende im Reibschweißverfahren verbunden, nachdem eine Überwurfmutter auf das Rohrende gesteckt wurde.

Die Seite des Kegels des Anschlusselements mit dem geringeren Durchmesser ist so dimensioniert, dass sie in das gegenüberliegende, zweite Rohrende gesteckt werden kann. Ausgehend von dieser Seite verbreitert sich das Anschlusselement konisch bis über den Durchmesser des ersten Rohrendes, mit dem es durch Reibschweißen verbunden ist, hinaus. Dadurch entsteht nach dem Verschweißen ein Schulterabschnitt, der als Auflagefläche zum Halten der Überwurfmutter dient.

Das zweite Rohrende weist ein Außengewinde auf, welches passend zum Innengewinde der Überwurfmutter ausgebildet ist. Nach dem Verschweißen wird das mit dem ersten Rohrende nun stoffschlüssig verbundene Anschlusselement in das zweite Rohrende gesteckt und die Überwurfmutter mit dem zweiten Rohrende verschraubt. Die Verschraubung presst das Anschlusselement in das zweite Rohrende, so dass eine dichte Verbindung entsteht.

Die beschriebene Verbindung weist mehrere Nachteile auf, die sich bereits bei der Montage zeigen: Aufgrund des hohen Anzugsmoments von 340 Nm und des häufig begrenzten Bauraums ist sowohl bei der Erstmontage und beim Austausch Spezialwerkzeug notwendig. Besondere Probleme ergeben sich, wenn keine Verbindung von festen Rohren, sondern flexiblen Schläuchen erfolgen soll: Eine torsionsfreie Montage ist durch schwierige Montagebedingungen (Überkopfmontage, Zugänglichkeit) bei dem geforderten Anzugsmomenten schwierig. Insgesamt ist damit der ordnungsgemäße Anzug der Verbindung nicht in jedem Fall gewährleistet.

Weitere Nachteile ergeben sich hinsichtlich der Versagensursachen: Neben den üblichen Ursachen des Versagens von Dichtkegelverschraubungen mit Überwurfmuttern wie Vibration, Setzen, Relaxion und Kriechen, sind insbesondere temperaturtransiente Mechanismen für ein Versagen verantwortlich. Bislang wird dem lediglich durch ein entsprechend hohes Anzugsmoment und - bei besonders hohen dynamischen Belastungen und/oder großen temperaturtransienten Mechanismen Überwurfmuttern in Verbindung mit einer Kontermutter verwendet. Die Sicherungswirkung der Kontermutter ist hier jedoch nicht verifiziert.

Es ist daher Aufgabe der Erfindung, ein Verbindungssystem der eingangs genannten Art anzugeben, welches Funktion und Sicherung der Verbindung zweier Rohr- oder Schlauchenden gewährleistet, besonders einfach zu montieren ist und gleichzeitig eine besonders hohe Lebensdauer aufweist.

Diese Aufgabe wird erfindungsgemäß durch ein Verbindungssystem gelöst, umfassend eine das erste Rohrende bündig umschließende, an der dem Dichtkegel abgewandten Seite des Schulterabschnitts angeordnete erste Spannscheibe, eine das zweite Rohrende umschließende mit diesem verbundene zweite Spannscheibe, und einer Mehrzahl von Schrauben, die die erste Spannscheibe mit der zweiten Spannscheibe lösbar verbinden.

Die Erfindung geht dabei von der Überlegung aus, dass eine besonders hohe Lebensdauer der Dichtkegelverschraubung gerade bei starken temperaturtransienten Vorgängen durch eine Erhöhung der Elastizität erreicht werden könnte. Überwurfmuttern sind wie jede Mutter in der Regel starre Körper mir einer vergleichsweise geringen Elastizität. Eine Erhöhung der Elastizität könnte beispielsweise durch eine Vergrößerung der Mutterhöhe als auch durch eine radiale oder axialer Querschnittsverringerung, dies jedoch nur bei gleichzeitigen Festigkeitsverlust und/oder bei asymmetrischer Krafteinleitung auf die Mutterauflagefläche mit einem Biegemoment und zusätzlicher Sicherung durch auf Gewindegänge verteilte Lasten erreicht werden. Zur Vermeidung dieser Nachteile wird daher das für den Anzug der Überwurfmutter erforderliche Gewindeanzugsmoment auf mehrere Schrauben verteilt, die um die Verschraubung herum angeordnet sind. Die Schrauben sind an zwei kreisringförmigen Spannscheiben mit entsprechenden Öffnungen und Gewinden angeordnet, die an den Rohr- bzw. Schlauchenden in der Art eines Flansches angeordnet und gesichert sind. Eine der Spannscheiben kann auf dem Gewinde des zweiten Rohrendes befestigt werden, die andere Spannscheibe wird analog zur bisher verwendeten Überwurfmutter an dem Schulterabschnitt des Anschlusselements gehalten.

Vorteilhafterweise sind die Schrauben dabei als Dehnschrauben ausgebildet. Hierunter wird eine merklich elastisch dehnbare Schraube verstanden, die hierfür einen schlanken und besonders langen Schaft aufweist. Der Durchmesser des Schraubenschafts ist kleiner als der des Gewindes. Hierdurch wird erreicht, dass die durch das Anziehen im gedehnten Schaft erzeugte Zugkraft sich nur wenig mindert, wenn später durch plastische Verformung ein Setzen in der Schraubverbindung stattfindet. Bei wechselnder Beanspruchung durch eine zeitlich veränderliche Kraft dehnt sich die Dehnschraube weiter oder sie zieht sich etwas zusammen, ohne überdehnt zu werden oder sich zu lockern, sie verhält sich in der Schraubenverbindung somit wie eine weiche, vorgespannte Zugfeder. Dies ist gerade bei temperaturtransienten Mechanismen von besonderem Vorteil.

In vorteilhafter Ausgestaltung sind die Schrauben gleichmäßig entlang des Umfangs der Rohrenden verteilt, d. h. die Achsen der Schrauben befinden sich in regelmäßigen Abständen auf einem Kreis um das jeweilige Rohrende. Hierdurch wird eine gleichmäßige Verteilung der Zugspannung entlang des Umfanges erreicht, wodurch die Stabilität und Langlebigkeit des Verbindungssystems weiter verbessert wird.

In weiterer vorteilhafter Ausgestaltung weisen die Schrauben einen Innenantrieb auf, d. h. können anstatt mit einem Schraubenschlüssel mit einem Schraubendreher, z. B. Kreuzschlitz, Torx oder Innensechsrund angezogen und gelöst werden. Dies ist in Einbausituationen mit sehr beengtem Bauraum von Vorteil, da somit auch die Schraubenkopfdurchmesser und die Durchmesser der Spannscheiben entsprechend reduziert werden können.

Zur Sicherung der Schrauben sind diese vorteilhafterweise mit Keilsicherungsscheiben versehen. Die Scheiben haben auf der Außenseite Radialrippen und auf der Innenseite Keilflächen, deren Steigung stets größer als die Gewindesteigung ist. Die paarweise verklebten Scheiben werden unter den Schraubenkopf gelegt. Aufgrund der Radialrippen kommt es beim Festziehen zu einem Formschluss. Das Scheibenpaar sitzt nun fest an seinem Platz und Bewegungen sind nur noch zwischen den Keilflächen möglich. Schon bei geringster Drehung in Löserichtung erfolgt aufgrund der Keilwirkung eine Erhöhung der Klemmkraft und die Schraube sichert sich somit selbst.

Nachteilig sowohl bei den bisher verwendeten Überwurfmuttern als auch beim bislang beschriebenen System ist jedoch, dass der Austausch der Überwurfmutter bzw. der Spannscheibe dem Rohrende mit dem Dichtkegel mit hohem Aufwand verbunden ist, da die Überwurfmutter bzw. die Spannscheibe nicht über den Schulterabschnitt des Dichtkegels am ersten Rohrende gezogen werden können. Die Schweißverschraubung muss also getrennt und nach Austausch von Überwurfmutter bzw. Spannscheibe wieder angeschweißt und geprüft werden. Dieses Problem wird behoben, indem der das erste Rohrende umschließende Abschnitt der ersten Spannscheibe als separater, mit der übrigen Spannscheibe lösbar verbundener Kreisscheibenring ausgebildet ist, wobei der Kreisscheibenring zwei separate Halbkreisscheibenringe umfasst. Der Außendurchmesser des Kreisscheibenrings ist dabei größer als der Durchmesser des Schulterabschnitts, so dass die Spannscheibe ohne den Kreis einen entsprechend großen Innendurchmesser aufweist und über den Schulterabschnitt geschoben werden kann. Erst anschließend werden die Halbkreisscheibenringe eingesetzt und an der übrigen Spannscheibe fixiert, so dass diese am Schulterabschnitt gehalten wird.

Zur Fixierung der Halbkreisscheibenringe an der übrigen Spannscheibe eignet sich insbesondere eine formschlüssige Fixierung. Ein Teil eines derartigen Formschlusses können insbesondere die Schraubenköpfe bilden, die vorteilhafterweise an der ersten Kreisschreibe angeordnet sind und sich über den Kreisscheibenring erstrecken. Bei angezogenen Schrauben überdecken diese also bündig die Halbkreisscheibenringe und halten sie an ihrer Position.

Für zusätzlichen Halt ist die Kontaktfläche zwischen Kreisscheibenring und übriger Spannscheibe vorteilhafterweise konisch ausgebildet. Idealerweise ist die Verjüngung dabei von den Schraubenköpfen abgewandt angeordnet, so dass der Kreisscheibenring nur in Richtung der Schraubenköpfe aus seiner Lage in der Spannscheibe entfernt werden kann, dort aber durch die Schraubenköpfe gehalten wird.

Alternativ oder zusätzlich dazu umfasst die Kontaktfläche zwischen Kreisscheibenring und übriger Spannscheibe vorteilhafterweise eine ringförmige Auflagefläche. Diese dient ebenfalls dem formschlüssigen Halt des Kreisscheibenrings in der Spannscheibe.

In weiterer vorteilhafter Ausgestaltung weist die Kontaktfläche zwischen Kreisscheibenring und übriger Spannscheibe weiterhin ein Gewinde auf. Dieses kann als Verliersicherung beim Einbau dienen.

Die mit der Erfindung erzielten Vorteile bestehen insbesondere darin, dass durch die Anordnung von Spannscheiben in der Art eines Flansches an einer Dichtkegelverbindung und deren Verbindung mittels Schrauben eine räumliche Trennung der elastischen Elemente (Schrauben) weg von der schnellen Temperaturänderung hin zu einer konstanten Temperatur erreicht wird. Die Zugkraft wird von einer bisher einzelnen Überwurfmutter auf viele diskrete Dehnelemente verteilt, die außerhalb des temperaturtransienten Bereichs angeordnet sind. Damit unterliegt die Verbindung keinerlei durch schnelle Temperaturänderungen verursachten Spannungen und die Verbindung ist resistent gegen temperaturtransiente Mechanismen.

Durch den Einsatz von mehreren Dehnelementen wird das ursprünglich an einer Überwurfmutter aufzubringende Anzugsmoment auf einen Bruchteil des ursprünglichen Anzugsmoments reduziert. Damit ist die Verwendung von herkömmlichen Werkzeugen insbesondere bei kleinem Bauraum mit begrenzter Zugänglichkeit und schwierigen Montagebedingungen auf Baustellen möglich.

Durch die Verlagerung der Biegeachse in die Dehnelemente und elastische Verformung von oberer und unterer Spannscheibe beim Anzug wird die Spannung auf bislang unbelastete Gewindegänge verteilt. Die Elastizität sowie die Sicherheit der Verbindung werden zusätzlich erhöht. Die zu verbindenden Elemente werden torsionsfrei verbunden, so dass sich das Verbindungssystem besonders für flexible Schläuche eignet.

Bei einer Leckage der Dichtkegelverschraubung im Schadenfall (z. B. beschädigter Konus der Schweißverschraubung) ist der Einbau oder Austausch von metallischen Dichtungen mit einer höheren Montagevorspannkraft aufgrund der großen Reserven oder durch Austausch geeigneter elastischer Elemente leicht realisierbar. Insgesamt entsteht eine hochelastische, universell einsetzbare Verbindung, deren Elastizität ohne Einschränkung der Festigkeit erzielt wird.

Bei der Verwendung zweier halbkreisscheibenringförmiger Segmente im Innenbereich der Haltescheibe am Dichtkegel ist es weiterhin möglich, einen einfachen Tausch ohne Entfernung des verschweißten Dichtkegels durchzuführen. Das Verbindungssystem ist damit besonders einfach nachrüstbar.

Schließlich wird die Montage des Verbindungssystems vereinfacht, da vergleichsweise leicht handhabbare Standard-Werkzeuge mit leicht aufzubringenden Anzugsmomenten auch in begrenzten Bauräumen verwendet werden können. Montagefehler werden dadurch reduziert.

Die Erfindung wird anhand von Ausführungsbeispielen in einer Zeichnung näher erläutert. Darin zeigen:
- FIG 1: eine Schnittzeichnung eines Verbindungssystems für eine Dichtkegelverschraubung mit zwei Spannscheiben und Dehnschrauben,
- FIG 2: eine Schnittzeichnung eines eine Aufsicht eines Verbindungssystems für eine Dichtkegelverschraubung mit zwei Spannscheiben und Dehnschrauben, bei dem eine Spannscheibe zwei innere Halbkreisscheibensegmente aufweist, und
- FIG 3: eine Aufsicht des Verbindungssystems aus FIG 2.

Gleiche Teile sind in allen Figuren mit denselben Bezugszeichen versehen.

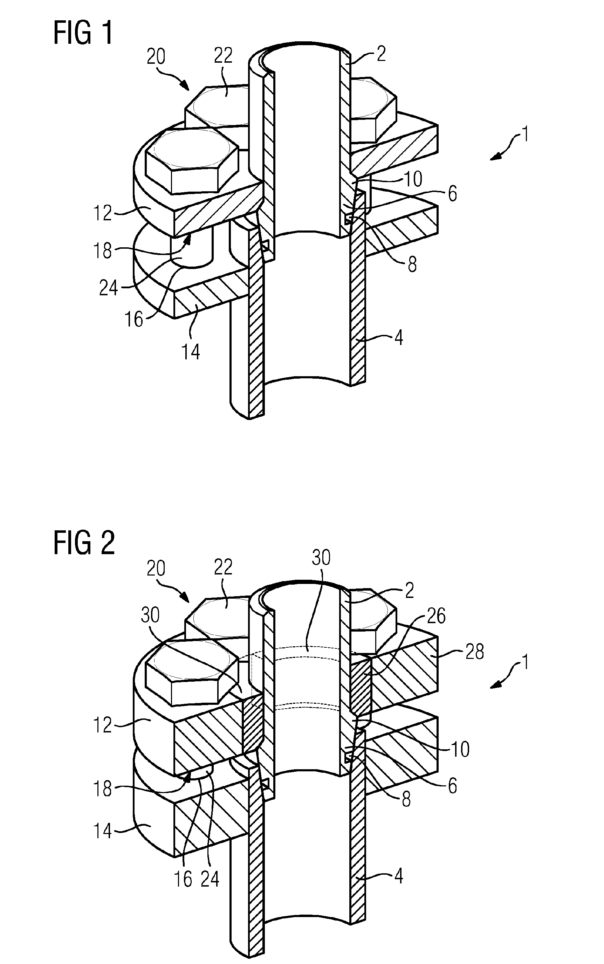

FIG 1 zeigt ein Verbindungssystem 1 zur lösbaren, dichten Verbindung eines ersten Rohrendes 2 mit einem zweiten Rohrende 4 im Schnitt. Bei den Rohrenden 2, 4 kann es sich auch um Enden von flexiblen Schläuchen handeln, die miteinander verbunden werden, der Begriff Rohrende ist also auch synonym zu Schlauchende zu verstehen. Beide Rohrenden 2, 4 sind hohlzylindrisch. Das erste Rohrende 2 weist einen konzentrisch angeschlossenen Dichtkegel 6 auf, der sich zum Abschluss des Rohrendes 2 hin soweit verjüngt, dass dessen Außendurchmesser kleiner wird als der Innendurchmesser des zweiten Rohrendes 4. Damit kann das erste Rohrende 2 mit dem Dichtkegel 6 konzentrisch in das zweite Rohrende 4 eingeführt werden.

Der Dichtkegel 6 weist weiterhin eine umlaufende Nut 8 auf, in die ein Dichtmaterial eingelegt ist. Der größte Außendurchmesser des Dichtkegels 6 ist größer als der Außendurchmesser des übrigen Rohrendes, so dass sich ein umlaufender Schulterabschnitt 10 ergibt. Im Außenprofil ähnelt das erste Rohrende 2 mit dem Dichtkegel 6 somit einer teilweise abgeschnittenen Pfeilspitze. Der Dichtkegel 6 kann beispielsweise durch Reibschweißen mit dem Rohrende 2 verbunden sein.

Das zweite Rohrende 4 weist hingegen auf seiner Außenseite ein nicht näher dargestelltes Gewinde auf. Bei bisher bekannten Verbindungssystemen 1 wird eine Überwurfmutter, die am Schulterabschnitt des Dichtkegels 6 des ersten Rohrendes 2 gehalten wird, auf das Gewinde des zweiten Rohrendes 4 geschraubt. Dadurch werden die beiden Rohrenden 2, 4 miteinander verbunden.

In der FIG 1 ist stattdessen eine erste Spannscheibe 12 und eine zweite Spannscheibe 14 vorgesehen. Beide Spannscheiben 12, 14 sind kreisscheibenringförmig, wobei der Innendurchmesser der ersten Spannscheibe 12 dem Außendurchmesser des ersten Rohrendes 2 entspricht und der Innendurchmesser der zweiten Spannscheibe 14 dem Außendurchmesser des zweiten Rohrendes 4 entspricht. Die Innenöffnung der zweiten Spannscheibe 14 weist ein Gewinde auf, mit dem sie auf das Außengewinde des zweiten Rohrendes 4 geschraubt ist.

Die zweite Spannscheibe 14 weist weiterhin insgesamt sechs in gleichmäßigen Abständen um die Achse der zweiten Spannscheibe 14 herum angeordnete Bohrungen 16, die ein Gewinde tragen. Die erste Spannscheibe 12 weist deckungsgleiche Bohrungen 18 auf, die jedoch nicht mit einem Gewinde versehen sind, sondern vielmehr so groß sind, dass durch jede der Bohrungen 18 eine Schraube 20 gesteckt werden kann, die in das Gewinde der jeweiligen Bohrung 16 in der zweiten Spannscheibe 14 geschraubt ist. Die Bohrung 18 ist jedoch kleiner als der Schraubenkopf 22 der jeweiligen Schraube 20.

Hierdurch werden die Spannscheiben 12, 14 miteinander verbunden. Da die erste Spannscheibe 12 am Schulterabschnitt 10 gehalten wird, führt das Anziehen der Schrauben 20 zum Einpressen des Dichtkegels 6 in das zweite Rohrende, so dass hier eine dichte, sichere Verbindung erreicht wird.

Die Schrauben 20 sind dabei als Dehnschrauben ausgebildet, d. h. der Schraubenschaft 24 ist schmaler gehalten als das Gewinde in den Bohrungen 16. Die Schrauben 20 weisen dadurch eine gewisse Elastizität auf. Die Schraubenköpfe 22 sind für einen Außenantrieb ausgestaltet, hier als Außenachtkant. In einer nicht dargestellten Ausführungsform werden auch Schrauben 20 mit Innenantrieb verwendet, was gerade bei begrenztem Bauraum ermöglicht, die Spannscheiben 12, 14 durch Verkleinerung der Abstände zwischen den Bohrungen 16, 18 kleiner zu dimensionieren.

Zur Sicherung der Schrauben 20 können diese in einer nicht dargestellten Ausführungsform auch mit Keilsicherungsscheiben versehen sein, die unter die Schraubenköpfe 22 gelegt werden.

FIG 2 zeigt ebenfalls im Schnitt eine alternative Ausführungsform, die sich von FIG 1 dadurch unterscheidet, dass die erste Spannscheibe 12 mehrteilig ausgebildet ist. Im Übrigen ist die Ausführungsform identisch zu der der FIG 1, so dass keine gesonderte Beschreibung der gleichen Teile erfolgt. Die alternativ beschriebenen Ausführungsformen können ebenso in der Ausführungsform der FIG 2 zur Anwendung kommen.

Die erste Spannscheibe 12 besteht in der Ausführungsform der FIG 2 aus insgesamt drei Segmenten. Zunächst ist die erste Spannscheibe 12 in einen inneren Kreisscheibenring 26 und einen äußeren Kreisscheibenring 28 unterteilt, die konzentrisch bündig ineinandergelegt sind. Der innere Kreisscheibenring 26 ist dabei in zwei Halbkreisscheibenringe 30 unterteilt. Der Durchmesser der zylindermantelförmigen Trennfläche zwischen den Kreisscheibenringen 26, 28 ist dabei größer als der Außendurchmesser des Schulterabschnitts 10. Dadurch kann der äußere Kreisscheibenring 28 über den Dichtkegel 6 geschoben werden.

Die beschriebene Ausgestaltung der ersten Spannscheibe 12 in der FIG 2 hat den Vorteil, dass ein Austausch der ersten Spannscheibe 12 ohne Lösen des Dichtkegels 6 vom ersten Rohrende 2 möglich ist. Der äußere Kreisscheibenring 28 kann nämlich über den Dichtkegel 6 geschoben werden. Erst anschließend werden die Halbkreisscheibenringe 30 mit dem äußeren Kreisscheibenring 28 verbunden.

Die Verbindung zwischen Halbkreisscheibenringen 30 und äußerem Kreisscheibenring 28 kann auf unterschiedliche Arten erfolgen. Im Ausführungsbeispiel der FIG 2 weisen die Halbkreisscheibenringe 30 ein Außengewinde und der äußere Kreisscheibenring 28 ein Innengewinde auf. Dies dient zunächst als Verliersicherung. Eine weitere Sicherung der Verbindung zwischen Halbkreisscheibenringen 30 und äußerem Kreisscheibenring 28 erfolgt durch die entsprechend große Dimensionierung der Schraubenköpfe 22 derart, dass diese über die Trennlinie zwischen Halbkreisscheibenringen 30 und äußerem Kreisscheibenring 28 ragen. Dadurch wird ein Formschluss hergestellt, der ein Herausfallen der Halbkreisscheibenringe 30 in Richtung des ersten Rohrendes 2 verhindert.

In alternativen, nicht dargestellten Ausführungsformen kann die Trennfläche zwischen Halbkreisscheibenringen 30 und äußerem Kreisscheibenring 28 anstatt der zylindermantelförmigen Ausbildung in der FIG 2 eine konische Form aufweisen oder es kann eine ringförmige Auflagefläche vorgesehen sein. Beide Ausführungsformen erlauben nur ein Entfernen der Halbkreisscheibenringe 30 aus dem äußeren Kreisscheibenring 28 in eine einzige axiale Richtung.

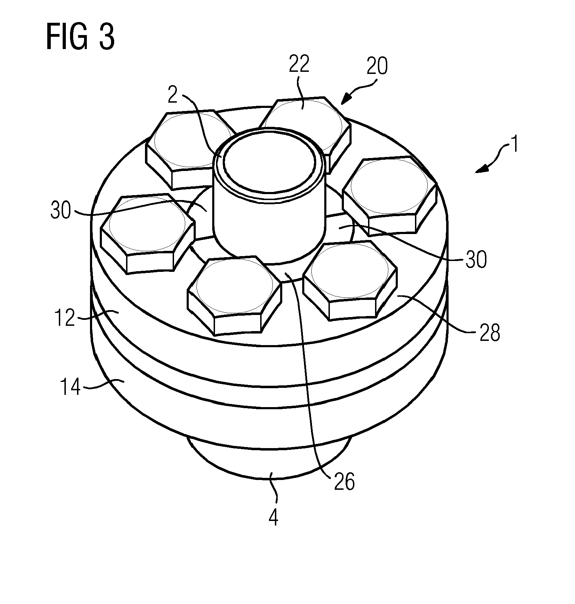

FIG 3 zeigt schließlich die Ausführungsform der FIG 2 in einer Aufsicht, die die Lage und Form der Schrauben 20 und der Halbkreisscheibenringe 30 verdeutlicht.

## Patentansprüche

1. Verbindungssystem (1) zur lösbaren Verbindung eines ersten Rohrendes (2) mit einem zweiten Rohrende (4), wobei das erste Rohrende (2) einen dem zweiten Rohrende (4) zugewandten Dichtkegel (6) und an seiner Außenseite einen Schulterabschnitt (10) aufweist, umfassend
eine das erste Rohrende (2) bündig umschließende, an der dem Dichtkegel (6) abgewandten Seite des Schulterabschnitts (10) angeordnete erste Spannscheibe (12),
eine das zweite Rohrende (4) umschließende mit diesem verbundene zweite Spannscheibe (16), und
eine Mehrzahl von Schrauben (20), die die erste Spannscheibe (12) mit der zweiten Spannscheibe (14) lösbar verbinden.

2. Verbindungssystem (1) nach Anspruch 1, bei dem die Schrauben (20) als Dehnschrauben ausgebildet sind.

3. Verbindungssystem (1) nach einem der vorhergehenden Ansprüche, bei dem die Schrauben (20) gleichmäßig entlang des Umfangs der Rohrenden (2, 4) verteilt sind.

4. Verbindungssystem (1) nach einem der vorhergehenden Ansprüche, bei dem die Schrauben (20) einen Innenantrieb aufweisen.

5. Verbindungssystem (1) nach einem der vorhergehenden Ansprüche, bei dem die Schrauben (20) mit Keilsicherungsscheiben versehen sind.

6. Verbindungssystem (1) nach einem der vorhergehenden Ansprüche, bei dem der das erste Rohrende (2) umschließende Abschnitt der ersten Spannscheibe (12) als separater, mit der übrigen Spannscheibe (12) lösbar verbundener Kreisscheibenring (26) ausgebildet ist, wobei der Kreisscheibenring (26) zwei separate Halbkreisscheibenringe (30) umfasst.

7. Verbindungssystem (1) nach Anspruch 6, bei dem die Köpfe (22) der Schrauben (20) an der ersten Kreisschreibe (2) angeordnet sind und sich über den Kreisscheibenring (26) erstrecken.

8. Verbindungssystem (1) nach Anspruch 6 oder 7, bei dem die Kontaktfläche zwischen Kreisscheibenring (26) und übriger Spannscheibe (12) konisch ausgebildet ist.

9. Verbindungssystem (1) nach einem der Ansprüche 6 bis 8, bei dem die Kontaktfläche zwischen Kreisscheibenring (26) und übriger Spannscheibe (12) eine ringförmige Auflagefläche aufweist.

10. Verbindungssystem (1) nach einem der Ansprüche 6 bis 9, bei dem die Kontaktfläche zwischen Kreisscheibenring (26) und übriger Spannscheibe (20) ein Gewinde aufweist.
